# EUROPEAN PATENT APPLICATION

(11) **EP 4 324 757 A1**
(43) Date of publication of application: **21.02.2024**
(21) Application number: 23187593.1
(22) Date of filing: 25.07.2023
(51) Int. Cl.: B65D 19/38, B65D 21/02, B65D 85/20, B65D 88/02, B65D 88/12

(54) **A TRANSPORT RACK FOR ELONGATED OBJECTS AND A METHOD FOR PACKING ELONGATED OBJECTS**

(30) Priority: 16.08.2022 FI 20225728
(71) Applicant: Mäkelä Alu Oy, 62830 Luoma-aho (FI)
(72) Inventor: Erkkilä, Jari, 62830 LUOMA-AHO (FI)
(74) Representative: Kolster Oy Ab

(57) **Abstract**

A transport rack (1) for elongated objects comprises a horizontal frame (3) having an outside and vertical supports extending from the outside of the frame (3). The horizontal frame (4) and the vertical supports define a space (8) for the elongated objects. The horizontal frame (3) comprises at least two parallel horizontal longitudinal beams (5) and horizontal cross-directional beams (6) that connect the horizontal longitudinal beams (5). The transport rack (1) comprises removable fastened spacers (2) for supporting another transport rack (1a) to be packed at least partially in the space (8). A method for packing elongated objects is also disclosed.

## Description

### FIELD OF THE INVENTION

The present invention relates to an transport rack for elongated objects that comprises a horizontal frame having an outside and vertical supports extending from the outside of the frame. The horizontal frame and the vertical supports define a space for the elongated objects. The horizontal frame comprises parallel horizontal longitudinal beams and horizontal cross-directional beams that connect the horizontal longitudinal beams.

### BACKGROUND OF THE INVENTION

When transporting long objects alternative packaging methods typically include packaging in a stretch film, a wooden box, a wooden frame or various transport racks. The transport racks are typically stackable but there are different ways to stack the racks. The transport rack may comprise a frame with vertical posts attached to it. Such rack is described and illustrated e.g. in US 10,512,326. A prerequisite for the stackable rack having the frame and the vertical posts is that the posts are outside the frame, i.e. the frame must fit inside the posts. It is important that the racks can be nested because it is a way to save costs when returning empty racks.

A known drawback of the stackable racks is that if a rack is not fully packed the efficiency in transport decreases because there is a non-utilized space in the rack. It is possible to load other racks on top of packed goods but it may damage the goods.

### BRIEF DESCRIPTION OF THE INVENTION

An object of the present invention is to provide a rack, such as a stackable rack, so as to overcome the above problem. The object of the invention is achieved by a rack which is characterized by what is stated in the independent claim. The preferred embodiments of the invention are disclosed in the dependent claims.

The invention is based on the idea of packing a rack in a space-saving manner.

An advantage of the invention is that it makes possible to pack transport racks more efficiently without damaging goods. Due to the efficient packaging transport costs are reduced.

In the following the transport rack is described in a position in which it is in use. It is expected in the description that the transport rack stands on a horizontal ground, such as a floor.

The transport rack may be for industrial use. The transport rack is for elongated objects, such as elongated aluminium profiles. The transport rack comprises a horizontal frame having an outside and vertical supports extending from the outside of the frame. The horizontal frame may be rectangular. The horizontal frame supports goods that are loaded in the rack. The horizontal frame and the vertical supports define a space for the elongated objects. The horizontal frame comprises parallel longitudinal beams and cross-directional beams that connect the longitudinal beams. The horizontal frame may comprise horizontal beams on top of each other, i.e. the horizontal beams are stacked in the vertical direction.

The vertical supports may be posts. The posts may be situated at the corners of the frame and preferably equidistantly at the outside of the longitudinal beams. The transport rack may be of metal, such as steel or aluminium. The transport rack may be dimensioned so that it fits inside a shipping container.

The transport rack comprises spacers for supporting another transport rack to be packed at least partially in the space. In other words, the first transport rack supports the second transport rack. It is also possible that the second transport rack is fully inside the space of the first transport rack. In that case it is possible to load further transport racks on top of the first transport rack or the second transport rack in order to achieve optimal loading, i.e. there are a maximum number of goods per volume.

The spacers are removably fastened to the rack. There are at least four spacers supporting the transport rack, i.e. at least two on the side of one longitudinal beam and another on the side of another longitudinal beam. However, more than four spacers is possible.

Each spacer has an upper part that gives support to the second transport rack that is packed inside the space. The spacer is placed in such a manner that goods, which are in the space of the first transport rack, do not suffer damages. Each spacer is attached to the first transport rack so that the spacer transfers its load to the first transport rack without straining the vertical supports.

The spacers may have different heights, or they may be attached on top of each other in order to adjust their location. The spacers may be attached around the posts of the first transport rack, or to the frame of the first transport rack.

### BRIEF DESCRIPTION OF THE DRAWINGS

In the following the invention will be described in greater detail by means of preferred embodiments with reference to the attached drawings, in which
Figure 1 shows an end view of stacked transport racks;
Figure 2 shows a side view of stacked transport racks;
Figure 3a shows a front view of a spacer;
Figure 3b shows a side view of a spacer of Fig. 3a;
Figure 3c shows a top view of a spacer of Fig. 3a;
Figure 4 shows an end view of stacked transport racks;
Figure 5 shows a side view of stacked transport racks;
Figure 6a shows a front view of a spacer;
Figure 6b shows a side view of a spacer of Fig. 6a;
Figure 6c shows a top view of a spacer of Fig. 6a.

### DETAILED DESCRIPTION OF THE INVENTION

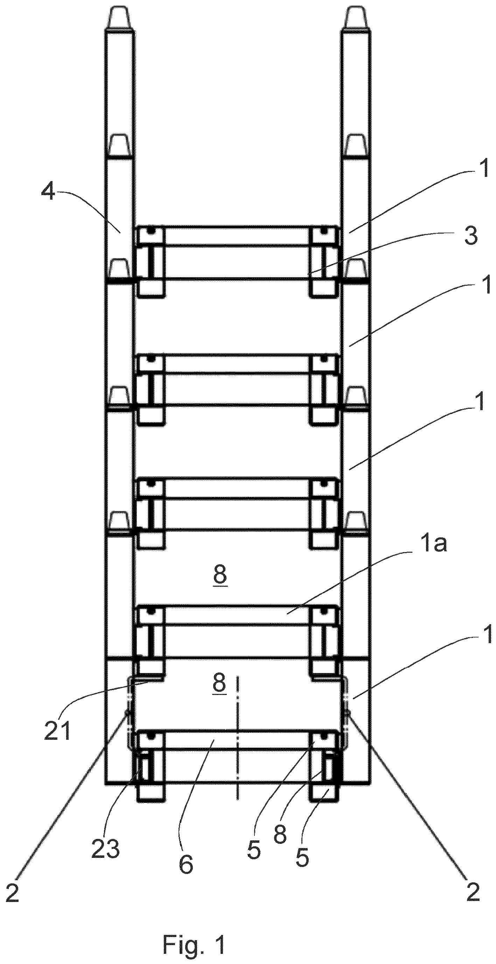

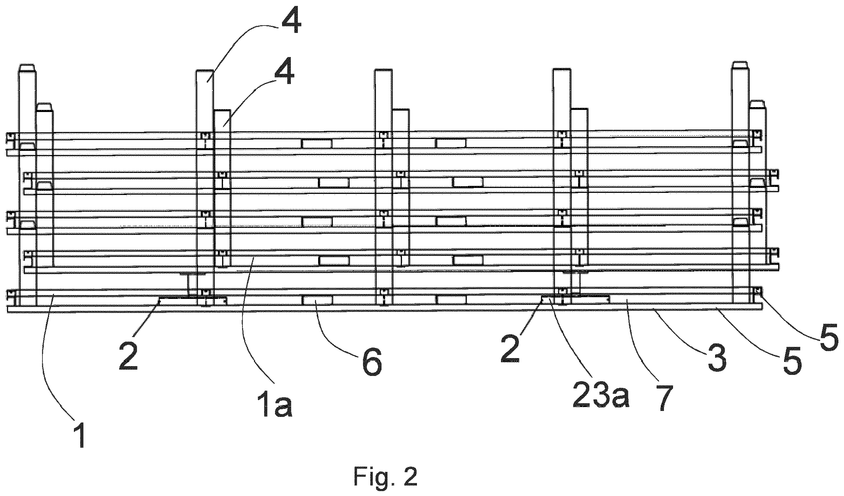

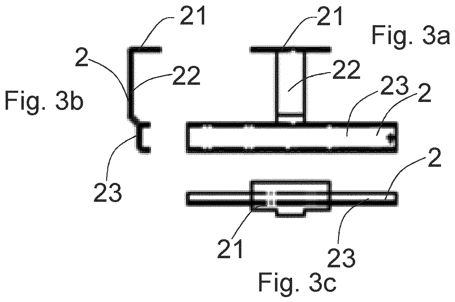

Figure 1 shows an end view of stacked transport racks 1, 1a and Fig. 2 shows the same as a side view. Figs. 3a to 3c show a spacer 2 used in connection with the transport rack of Figs. 1 and 2. The transport racks 1 in Figs. 1 and 2 are normally stacked racks while the transport rack 1a is a transport rack carried by the spacers 2.

The transport rack 1, 1a comprises a horizontal frame 3 and vertical posts 4. The frame 3 comprises at least two parallel longitudinal beams 5 and cross-directional beams 6 that connect the longitudinal beams 5 on the opposite sides of the frame 3. The posts 4 are fastened to the outside of the frame 3. There may be more than one layer of longitudinal beams and/or cross-directional beams. The upper surface of the frame 3 and the inner sides of the posts define a space 8 wherein goods can be packed. There may be legs or rollers under the frame 3.

The spacers 2 are removably connected to the longitudinal beams 5 or between vertically stacked horizontal beams 5. The spacer 2 comprises an upper part 21 that supports the rack 1a loaded on the spacer 2. A lower part 23 is for connecting to an appropriate location in the rack 1. The lower part 23 may be placed between the longitudinal beams 5 that are on top of each other, or a longitudinal beam 5 may be provided with an opening wherein the lower part 23 fits. The longitudinal beam 5 or the space between the longitudinal beams 5 may comprise a longitudinal groove 7 wherein the lower part 23 fits. The post 4 may support one end 23a of the lower part 23 in such a manner that the lower part 23 does not slip out the groove (Fig. 2). The lower part 23 may rest against a vertical wall 8 inside the groove 7 (Fig. 1). A middle part 22 determines a distance between the upper part 21 and the lower part 23. The posts 4 of the nested transport racks 1, 1a intermesh in the longitudinal direction of the racks 1.

The transport rack 1a that is carried by spacers 2 may carry another transport rack, i.e. there may be nested transport racks 1a that are supported by the spacers 2.

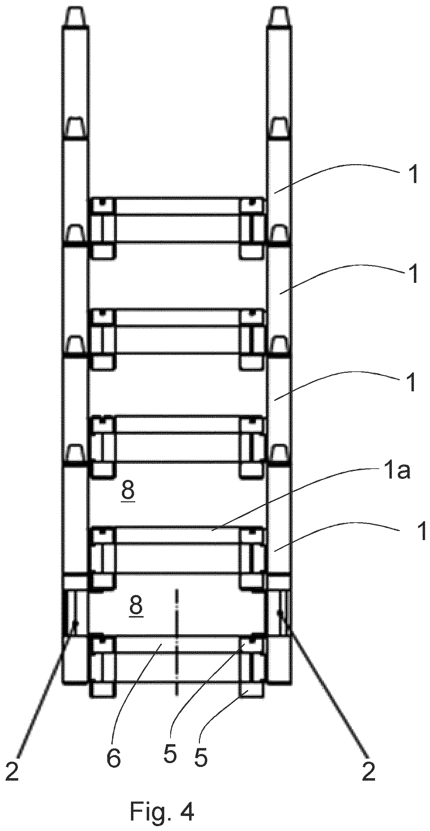

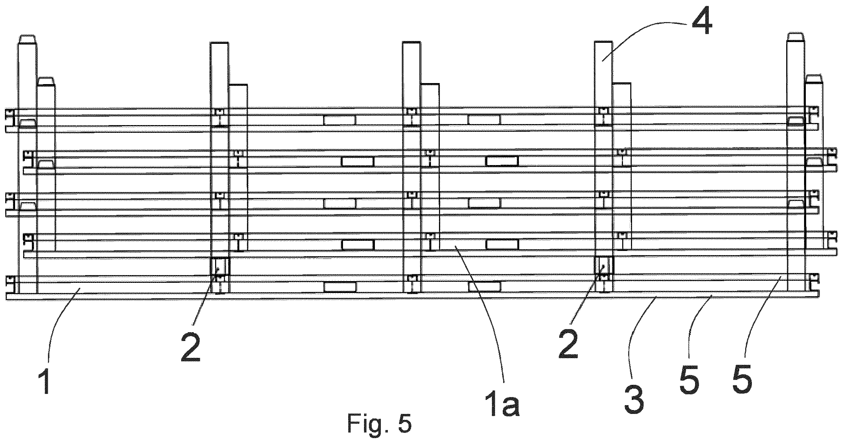

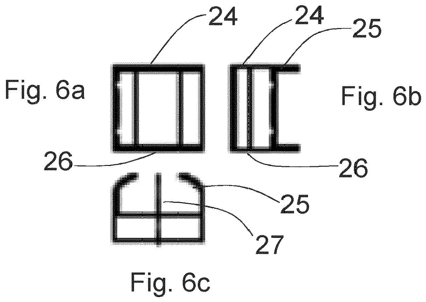

Figure 4 shows an end view of stacked transport racks 1 and Fig. 5 shows the same as a side view. Figs. 6a to 6c show a spacer 2 used in connection with the transport rack 1 of Figs. 4 and 5. The transport racks 1 in Figs. 4 and 5 are normally stacked racks while the transport rack 1a is a transport rack carried by the spacers 2.

The transport rack 1, 1a comprises a horizontal frame 3 and vertical posts 4. The frame 3 comprises at least two parallel longitudinal beams 5 and cross-directional beams 6 that connect the longitudinal beams 5 on the opposite sides of the frame 3. The posts 4 are fastened to the outside of the frame 3. There may be more than one layer of longitudinal beams and/or cross-directional beams. There may be legs or rollers under the frame 3.

The spacers 2 are removably connected to the posts 4. The spacer 2 comprises an upper part 24 that supports the transport rack 1a above it. The spacer 2 has arms 25 that surround a space 27. The arms are intended to embrace the post 4 in such a manner that the post 4 passes through the space 27.

The transport rack 1a that is carried by spacers 2 may carry another transport rack, i.e. there may be nested transport racks 1a that are supported by the spacers 2.

It will be obvious to a person skilled in the art that, as the technology advances, the inventive concept can be implemented in various ways. The invention and its embodiments are not limited to the examples described above but may vary within the scope of the claims.

## Claims

1. A transport rack (1) for elongated objects, the transport rack (1) comprises a horizontal frame (3) having an outside and vertical supports extending from the outside of the frame (3), the horizontal frame (4) and the vertical supports defining a space (8) for the elongated objects, the horizontal frame (3) comprises at least two parallel horizontal longitudinal beams (5) and horizontal cross-directional beams (6) that connect the horizontal longitudinal beams (5), **characterized in that** the transport rack (1) comprises spacers (2) for supporting another transport rack (1a) to be packed at least partially in the space (8), the spacers (2) being removably fastened to the rack (1).

2. The rack according to claim 1, **characterized in that** the transport rack (1) is a stackable rack.

3. The rack according to claim 1 or 2, **characterized in that** each spacer (2) comprises an upper part (21, 24) for supporting a rack (1a) to be loaded inside the space (8).

4. The rack according to any preceding claim, **characterized in that** each spacer (2) comprises a lower part (23) for fastening to the frame (3).

5. The rack according to any preceding claim 1 to 3, **characterized in that** each spacer (2) comprises arms (25) for fastening to one of the vertical supports.

6. A method for packing elongated objects in a first transport rack (1) and a second transport rack (1, 1a), each rack (1, 1a) comprises a horizontal frame (3) having an outside and vertical supports extending from the outside of the frame (3), the horizontal frame (3) and the vertical supports defining a space (8) for the elongated objects, the method comprises
- packing the elongated objects in the space (8) of the first transport rack (1) in such a manner that the space (8) is partially loaded,
- inserting spacers (2) to the first transport rack (1),
- placing the second transport rack (1a) on the spacers (2), and
- packing the space (8) of the second transport rack (1a).
